# EUROPÄISCHE PATENTSCHRIFT

(11) **EP 1 850 033 B1**
(45) Veröffentlichungstag und Bekanntmachung des Hinweises auf die Patenterteilung: **24.06.2009**
(21) Anmeldenummer: 07106096.6
(22) Anmeldetag: 13.04.2007
(51) Int. Cl.: F16H 7/08, F16H 7/12

(54) **Spann- und Schwingungsdämpfungsvorrichtung für einen Umschlingungstrieb und Verfahren zum Betreiben einer solchen Vorrichtung**
Tensioning and vibration absorbing device for an enlacement drive and method for operating such a device
Dispositif d'amortisseur d'oscillation et de tension pour un mécanisme d'entraînement à courroie et procédé d'entraînement d'un tel dispositif

(30) Priorität: 28.04.2006 DE 102006019879
(43) Veröffentlichungstag der Anmeldung: 31.10.2007
(73) Patentinhaber: Schaeffler KG, 91074 Herzogenaurach (DE)
(72) Erfinder: Schwarz, Sergej, 90491 Nürnberg (DE)

(56) Entgegenhaltungen:
- EP-A- 1 310 700
- DE-A1- 3 904 017
- DE-C1- 19 710 965
- US-A1- 2005 192 142

## Beschreibung

### Gebiet der Erfindung

Die Erfindung betrifft ein Verfahren zum Betreiben einer Spann- und Schwingungsdämpfungsvorrichtung für einen Umschlingungstrieb, entsprechend dem Oberbegriff des Anspruchs 1 und wie es aus der DE 197 10965 C bekannt ist.

### Hintergrund der Erfindung

Spann- und Schwingungsdämpfungssysteme für Umschlingungstriebe, wie beispielsweise Ketten- oder Riementriebe an Kraftfahrzeugmotoren oder anderen Anlagen, sind seit langem in den unterschiedlichsten Ausführungen bekannt.

So beschreibt beispielsweise die DE 92 18 566 U1 einen mechanischen Riemen- oder Kettenspanner mit einem ortsfesten Basisteil, das eine Hülse aufweist, über die ein schwenkbares Spannteil geführt ist, wobei zwischen dem Basisteil und dem Spannteil eine beide Bauteile verspannende und zueinander verdrehende Feder eingesetzt ist. Zur Dämpfung von hochfrequenten Stellbewegungen des Spannteils ist vorgesehen, dass eine ausschließlich von einer Axialkraft beaufschlagte Reibscheibe drehfest mit dem Spannteil verbunden ist und über einen Reibbelag am Basisteil anliegt. Im Wesentlichen erfolgt hierbei die Schwingungsdämpfung durch Überführung von Bewegungsenergie in Wärme aufgrund der Reibung zwischen der Reibscheibe und dem Reibbelag.

Außerdem ist zur Dämpfung hochfrequenter Stellbewegungen einer Spannrolle beziehungsweise des dieselbe tragenden Hebelarms aus der WO 02/29281 A1 ein relativ komplizierter Riemenspanner mit Reibungsdämpfung bekannt, welcher einen an einem festen Teil schwenkgelagerten Spannerrahmen mit darauf drehgelagerter Spannrolle aufweist. Ein ebenfalls am festen Teil schwenkgelagerter Dämpferarm weist einen so genannten Dämpferschuh auf, der seinerseits mit einer Dämpferlaufbahn des Spannerrahmens in Wirkverbindung steht. Schließlich ist eine Vorspannfeder vorgesehen, die sich einenends am schwenkbaren Spannerrahmen und anderenends am Dämpferarm abstützt. Sind hochfrequente Stellbewegungen der Spannrolle zu verzeichnen, führt dies zu Relativbewegungen zwischen dem Dämpferschuh und der Dämpferlaufbahn, welches wiederum zu einer Dämpfung der Stellbewegungen der Spannrolle bzw. des Spannerrahmens führen soll.

Vorstehenden mechanischen Ketten- bzw. Riemenspannern ist gemein, dass die Schwingungsdämpfung lediglich passiv erfolgt, wobei die Dämpfungskraft proportional zum Reibungskoeffizienten am Reibbelag ist. Des Weiteren ist die Dämpfungskraft abhängig von der Auslenkgeschwindigkeit und Schwingungsfrequenz des Spannteils bzw. Hebelarms sowie der Temperatur. Die Schwingungsamplituden umfassen hierbei Größenordnungen von einigen Millimetern. Ferner sind bei derartigen Spannern Stick-Slip-Effekte nicht auszuschließen, bei denen es zu ruckartigen Bewegungen und Geräuschentwicklungen des Spannhebels kommen kann. Aufgrund des nicht zu vermeidenden Verschleißes der Reibelemente ist die Lebensdauer des Spanners begrenzt. Schließlich ist für derartige Spanner ein erhöhter Bauraum erforderlich.

Demgegenüber sind aus der Praxis auch hydraulische Riemenspanner bekannt, wobei der Riemen zwar mittels einer Feder mechanisch vorgespannt ist, die Schwingungsdämpfung jedoch derart erfolgt, dass Hydrauliköl durch einen engen Spalt gepumpt und im Ergebnis ebenfalls mechanische Schwingungsenergie in Wärme umgewandelt wird. Auch hierbei erfolgt die Schwingungsdämpfung lediglich passiv, wobei die Dämpfungskraft geschwindigkeits-, temperatur- und frequenzabhängig ist. Fernerhin bedarf es einer bestimmten Einbaulage des Spanners innerhalb des Systems, um ein Ausfließen des Hydrauliköls zu vermeiden. Auch diese technische Lösung geht mit einem erhöhten Bedarf an Bauraum einher.

Schließlich ist aus der DE 199 59 521 A1 eine dynamisch ansteuerbare Führungs- und Spannvorrichtung für Endlostriebe, wie ein Steuertrieb einer Brennkraftmaschine, sowie ein Verfahren zu deren Betreiben bekannt. Im Wesentlichen wird dort ein dynamisch ansteuerbarer Aktuator in Form eines Piezoaktors vorgeschlagen, mit dessen Hilfe ein schienenförmiges Spannelement gegen das Zugmittel des Endlostriebes verlagerbar ist. Die Ansteuerung des Aktors erfolgt in Abhängigkeit von Betriebsgrößen der Brennkraftmaschine.

### Aufgabe der Erfindung

Der Erfindung liegt die Aufgabe zugrunde, ein Verfahren zum Betreiben einer Spann- und Schwingungsdämpfungsvorrichtung für einen Umschlingungstrieb zu schaffen, welche im Hinblick auf den eingangs beschriebenen Stand der Technik bei minimiertem Aufwand eine noch wirkungsvollere Schwingungsdämpfung als bisher bekannt ermöglicht.

### Zusammenfassung der Erfindung

Die Erfindung betrifft ein Verfahren gemäß den Merkmalen des Hauptanspruchs 1.

Statt der Betriebsgrößen der Brennkraftmaschine, wie dies der Stand der Technik vorschlägt, finden nunmehr ausschließlich die direkt von dem Umschlingungstrieb erzeugten und von einem diesbezüglichen Sensor detektierten Schwingungen bei der Schwingungsdämpfung Berücksichtigung. Umfangreiche und demgemäß fehleranfällige Berechnungen eines zugeordneten Steuerungs- und Regelungsvorrichtung sind daher nicht mehr erforderlich.

Der Unteranspruch beschreibt bevorzugte Weiterbildung oder Ausgestaltung der Erfindung.

### Kurze Beschreibung der Zeichnungen

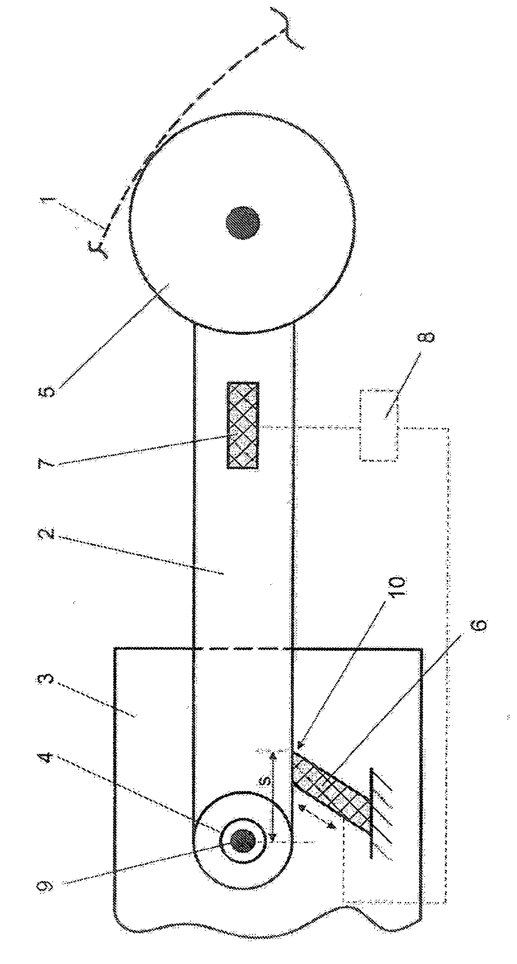

Die Erfindung wird im Folgenden anhand einer beiliegenden Zeichnung näher erläutert. Die einzige Figur zeigt sehr schematisch eine erfindungsgemäß ausgebildete Spann- und Schwingungsdämpfungsvorrichtung für einen Umschlingungstrieb.

### Detaillierte Beschreibung der Zeichnung

Die Spann- und Schwingungsdämpfungsvorrichtung für einen Umschlingungstrieb mit einem Umschlingungsmittel 1, welches eine Endloskette oder ein Endlosriemen sein kann, umfasst im Wesentlichen einen Spannrollenträger 2, welcher vorliegend einenends in einer mit einem tragenden Bauteil 3 fest verbundenen Gleitbuchse 4 schwenkbar gelagert ist, und anderenends eine drehgelagerte Spannrolle 5 trägt.

Das tragende Bauteil 3 kann beispielsweise durch eine an einem tragenden Karosseriebauteil eines Kraftfahrzeugs befestigbare Grundplatte, durch das genannte Karosseriebauteil selbst, ein Motor- oder Getriebegehäuse oder jegliches andere geeignete tragende Bauteil gebildet sein. Zur Gewährleistung einer konstanten Spannung des Umschlingungsmittels 1 wird die Spannrolle 5 mit dem Umschlingungsmittel 1 in Wirkverbindung gebracht, indem der Spannrollenträger 2 samt Spannrolle 5 mit einer bestimmten Vorspannkraft gegen das Umschlingungsmittel 1 gedrückt wird. Zur Kraftbeaufschlagung ist vorliegend eine an sich bekannte piezoelektrische Struktur 6 vorgesehen, die sich einenends am tragenden Bauteil 3 und anderenends am Spannrollenträger 2 abstützt.

Piezoelektrische Strukturen 6 oder Piezo-Aktoren, beispielsweise in Form von Piezo-Keramiken, sind dazu geeignet und vorgesehen, durch eine elektrische Spannung verformt zu werden. Sie erlauben demgemäß beim Anlegen einer Spannung durch Verformung äußerst präzise Bewegungen, die im Übrigen mit sehr hohen zu erzeugenden Kräften einhergehen.

Vorliegend ist die piezoelektrische Struktur 6 durch einen an sich bekannten piezoelektrischen Linear-Aktor gebildet. Möglich ist es jedoch auch und demgemäß durch die Erfindung mit erfasst, in Abhängigkeit von der gewünschten Auslenkung der piezoelektrischen Struktur 6 einen Piezo-Stapel, bestehend aus mehreren in Reihe geschalteten piezoelektrischen Linear-Aktoren, zu nutzen.

Aufgrund der Erkenntnis, dass eine piezoelektrische Struktur 6 bzw. ein piezoelektrischer Aktor durch Anlegen einer Spannung sich um etwa 1 % seiner Baulänge verlängern bzw. verkürzen kann, ist relativ komfortabel die gewünschte Anzahl der zu kombinierenden piezoelektrischen Aktoren zu einem Piezo-Stapel ermittelbar.

Wie die einzige Figur weiter zeigt, ist zumindest ein Schwingungssensor 7 vorgesehen, der über einen eine elektronische Steuerungs- und Regelungseinheit 8 aufweisenden Steuerungs- und Regelungskreis zur Ansteuerung der piezoelektrischen Struktur 6 mit derselben elektrisch verbunden ist. Die Energieversorgung für die piezoelektrische Struktur 6 und für den Schwingungssensor 7 kann hierbei zweckmäßigerweise extern über beispielsweise das Bordnetz eines Kraftfahrzeugs erfolgen.

Ebenso kann der Schwingungssensor 7 auch drahtlos mit der Steuerungs- und Regelungseinheit 8, beispielsweise per Funk verbunden sein (nicht näher gezeigt). In diesem Fall bietet sich insbesondere ein dem Schwingungssensor 7 direkt zugeordneter elektrischer Akkumulator an.

In Abhängigkeit von einer durch den Betrieb des Umschlingungstriebes in denselben eingebrachten und mittels des zumindest einen Schwingungssensors 7 detektierten Schwingungen ist durch die piezoelektrische Struktur 6 eine Kraft zur Kompensation bzw. zur Dämpfung dieser Schwingungen erzeugbar und über den Spannrollenträger 2 und die Spannrolle 5 auf das Umschlingungsmittel 1 leitbar, in dessen Folge bei geeignet gewählter Frequenz und Amplitude der Krafteinwirkung durch die piezoelektrische Struktur 6 eine Schwingungsdämpfung realisierbar ist.

Hier handelt es sich somit nicht um eine passive Dämpfung der Schwingungen wie bei herkömmlichen Reib- bzw. hydraulischen Systemen, sondern um eine aktive Dämpfung derart, dass die piezoelektrische Struktur 6 in Form eines Aktors oder eines Stapels von Aktoren aktiv gegen Schwingung ansteuern kann, so dass keine störenden Schwingungen mit großer Amplitude entstehen. Somit wird beispielsweise ein an sich bekanntes "Flattern" des Umschlingungsmittels 1, wie z. B. eines Riemens, verhindert. Ein ruhiger Lauf und eine besondere Schonung des Umschlingungsmittels 1 sind die Folge.

Die Dämpfungswirkung durch die Vorrichtung gemäß der Erfindung ist unabhängig von äußeren Parametern wie Temperatur und Geschwindigkeit des Umschlingungsmittels einstellbar. Da die Schwingungsamplituden des Spannrollenträgers 2 auf einem sehr niedrigen Niveau gehalten werden können, verschleißt die Gleitbuchse 4 in einem viel geringeren Maße als in konventionellen Vorrichtungen. Eine insbesondere an einem Riemen feststellbare Verkippung desselben, als derzeit in vielen Fällen ein die Lebensdauer des Umschlingungsmittels begrenzender Faktor, ist sehr stark reduzierbar.

Auch werden gegenüber herkömmlichen Reibbelägen zur Dämpfung von Schwingungen sich dort einstellende nachteilige Stick-Slip-Effekte grundsätzlich vermieden.

Der Schwingungssensor 7 ist vorliegend direkt am Spannrollenträger 2 angeordnet. Sicherlich sind auch andere Bauteile des Umschlingungstriebes zur Befestigung des Schwingungssensors 7 nutzbar, sofern diese durch den Betrieb des Umschlingungstriebes zum Schwingen angeregt werden.

So kann der zumindest eine Schwingungssensor 7 ebenfalls als piezoelektrische Struktur, beispielsweise als Schwingungssensor 7 mit einer seismischen Masse ausgebildet sein, und am genannten Spannrollenträger 2 oder einem anderen schwingenden Bauteil des Umschlingungstriebes oder auch in den gegebenenfalls zur Anwendung kommenden Piezo-Stapel integriert sein.

Möglich ist es ferner, dass ein piezoelektrischer Aktor (Linear-Aktor) derart ausgebildet ist, dass derselbe sowohl als Aktor als auch als Schwingungssensor fungiert.

Auch kann eine piezoelektrische Struktur 6, sei es ein Aktor und/oder einer Schwingungssensor, hinsichtlich der erforderlichen Energieversorgung selbstversorgend ausgebildet sein, indem beispielsweise durch Verformung der Piezo-Keramiken infolge der Schwingungsanregung derselben eine elektrische Spannung erzeugt wird, die wiederum anderen piezoelektrischen Aktoren oder Schwingungssensoren zur Verfügung gestellt werden kann.

Wie der einzigen Figur weiter zu entnehmen ist, kann aufgrund der vorstehenden Eigenschaften der piezoelektrischen Struktur 6 in Form eines einzigen Linear-Aktors oder eines Piezo-Stapels dieselbe sehr nahe an der Drehachse 9 des am tragenden Bauteil 3 schwenkbar gelagerten Spannrollenträgers 2 angeordnet werden, wodurch Einsparungen an Bauraum zu verzeichnen sind.

Die Beabstandung "s" zwischen der Drehachse 9 des Spannrollenträgers 2 und dem Angriffspunkt 10 der piezoelektrischen Struktur 6 am Spannrollenträger 2 kann somit in Abhängigkeit von der maximal möglichen Auslenkung der pizoelektrischen Struktur 6 und der maximal erforderlichen Auslenkung der Spannrolle 5 des Spannrollenträgers 2 minimiert werden.

Wie bereits weiter oben erläutert wurde, beschränkt sich die Erfindung nicht auf Kettentriebe, die herkömmlich relativ geringe Nachstellbewegungen bzw. Auslenkungen von zugeordneten Spannelementen erfordern, sondern erfasst auch Riementriebe, bei denen die Nachstellbewegungen im Verhältnis erhöht sein können.

Um im Sinne der Erfindung auch derartige Nachstellbewegungen wirkungsvoll bewerkstelligen zu können, kann es angezeigt sein, die piezoelektrische Struktur 6 in Form eines oder mehrerer zu einem Piezo-Stapel zusammengefasster Aktoren in Reihe mit einem nicht näher gezeigten herkömmlichen mechanisch oder hydraulisch betätigbaren Spannelement anzuordnen. Dies bedeutet, dass ein beispielsweise federbelasteter Linearspanner mit einer piezoelektrischen Struktur 6 beziehungsweise mit einem piezoelektrischen Aktor oder einem Piezo-Stapel kombiniert ist, wodurch große Verstellwege durch den genannten mechanisch oder hydraulisch betätigbaren Linearspanner bewirkt werden, während die Dämpfung der in Rede stehenden Schwingungen im Wesentlichen mittels der piezoelektrischen Struktur 6 erfolgt.

Schließlich besteht auch die Möglichkeit, die vom Schwingungssensor 7 bereitgestellten Messsignale zur Erfassung des aktuellen Verschleißzustandes des Umschlingungstriebes zu nutzen, indem ein Abgleich dieser Messsignale mit Referenzwerten, die beispielsweise im elektronischen Speicher der Steuerungs- und Regelungseinheit 8 hinterlegt sind, erfolgt.

### Bezugszeichen

- 1: Umschlingungsmittel
- 2: Spannrollenträger
- 3: tragendes Bauteil
- 4: Gleitbuchse
- 5: Spannrolle
- 6: piezoelektrische Struktur
- 7: Schwingungssensor
- 8: Steuerungs- und Regelungseinheit
- 9: Drehachse (Spannrollenträger)
- 10: Angriffspunkt (piezoelektrische Struktur 6 / Spannrollenträger 2)

## Patentansprüche

1. Verfahren zum Betreiben einer Spann- und Schwingungsdämpfungsvorrichtung für einen Umschlingungstrieb, mit einem Umschlingungsmittel (1) in Form einer Endloskette oder eines Endlosriemens und mit einem an einem tragenden Bauteil (3) schwenkbar gelagerten Spannrollenträger (2) mit einer Spannrolle (5), wobei zur Gewährleistung einer konstanten Spannung des Umschlingungsmittels die Spannrolle (5) mit dem Umschlingungsmittel (1) in Wirkverbindung bringbar und der Spannrollenträger (2) samt Spannrolle (5) mittels einer piezoelektrischen Struktur (6) mit einer bestimmten Vorspannkraft gegen das Umschlingungsmittel (1) beaufschlagbar ist, und bei der zumindest ein mit einer elektronischen Steuerungs- und Regelungseinheit (8) verbundener Schwingungssensor (7) vorhanden ist, **dadurch gekennzeichnet, dass** die Informationen über die detektierten Schwingungen zur Erfassung des aktuellen Verschleißzustandes des Umschlingungstriebes verwendet werden.

2. Verfahren nach Anspruch 7, **dadurch gekennzeichnet, dass** zur Erfassung des aktuellen Verschleißzustandes des Umschlingungstriebes die vom Schwingungssensor (7) bereitgestellten Messsignale mit Referenzwerten verglichen werden, die im elektronischen Speicher der Steuerungs- und Regelungseinheit (8) abgespeichert sind.

## Claims

1. Method for operating a tensioning and vibration damping device for a wraparound drive, having a wraparound means (1) in the form of an endless chain or an endless belt and having a tensioning roller carrier (2) which is pivotably mounted on a load-bearing component (3) and which has a tensioning roller (5), with it being possible for the tensioning roller (5) to be placed in operative connection with the wraparound means (1), and with it being possible for the tensioning roller carrier (2) together with the tensioning roller (5) to be loaded with a predetermined preload force against the wraparound means (1) by means of a piezoelectric structure (6), in order to ensure a constant tension of the wraparound means, and in which tensioning and vibration damping device at least one vibration sensor (7) is provided which is connected to an electronic control and regulating unlit (8), **characterized in that** the items of information regarding the detected vibrations are used to measure the present wear state of the wraparound drive.

2. Method according to Claim 1, **characterized in that**, to measure the present wear state of the wraparound drive, the measurement signals provided by the vibration sensor (7) are compared with reference values which are stored in the electronic memory of the control and regulating unit (8).

## Revendications

1. Procédé pour faire fonctionner un dispositif d'amortissement d'oscillation et de tension pour un mécanisme d'entraînement en boucle, comprenant un moyen formant boucle (1) en forme de chaîne sans fin ou de courroie sans fin et un support de rouleau de tensionnement (2) monté à pivotement sur un composant porteur (3) avec un rouleau de tensionnement (5), le rouleau de tensionnement (5) pouvant être amené en liaison fonctionnelle avec le moyen formant boucle (1) pour garantir une tension constante du moyen formant boucle et le support de rouleau de tensionnement (2) avec le rouleau de tensionnement (5) pouvant être sollicité au moyen d'une structure piézoélectrique (6) avec une force de précontrainte déterminée contre le moyen formant boucle (1), et dans lequel au moins un capteur d'oscillation (7) connecté à une unité de commande et de régulation électronique (8) est prévu, **caractérisé en ce que** les informations concernant les oscillations détectées sont utilisées pour détecter l'état d'usure actuel du mécanisme d'entraînement en boucle.

2. Procédé selon la revendication 1, **caractérisé en ce que** pour détecter l'état d'usure actuel du mécanisme d'entraînement en boucle, les signaux de mesure fournis par le capteur d'oscillation (7) sont comparés à des valeurs de référence qui sont mémorisées dans la mémoire électronique de l'unité de commande et de régulation (8).
